# EUROPEAN PATENT APPLICATION

(11) **EP 4 369 339 A1**
(43) Date of publication of application: **15.05.2024**
(21) Application number: 22383071.2
(22) Date of filing: 08.11.2022
(51) Int. Cl.: G11B 27/031, H04N 21/43

(54) **A VIDEO PLAYER AND A QUALITY CONTROL METHOD FOR VIDEO CREATION**

(71) Applicant: Loc & Capture S.L., 03004 Alicante (ES)
(72) Inventor: Martínez Díaz, Óscar, Alicante (ES)
(74) Representative: Ballester Cañizares, Rosalia

(57) **Abstract**

A video player and a computer-implemented quality control method for video creation arranged to compare iterations of the same video in different languages comprising the steps of **(a)** drag and drop a plurality of videos in a video player embedded in a navigator displayed in a screen; **(b)** show the plurality of videos in the screen wherein each video is individually shown in one window within the same screen; and **(c)** simultaneously and synchronously control all the videos displayed in the screen.

## Description

### Technical Field

The present disclosure relates generally to a video player and a quality control method for video creation and, more specifically, to a device, a method, and a computer-accessible medium for playing a video previously created to improve the quality of the edition.

### Background of the invention

When localizing, subtitling, and producing video in multiple languages, it is often necessary to edit 10, 20 or even 50 videos per assignment, usually with little time to spare. To date, this quality control in the subtitling process -for example, to check that the translation of a given video game is consistent across all the languages in which the video is edited- is done one by one, comparing the video that can be considered as "original" with the video to be corrected. Obviously, when you must correct 10, 20 or even 50 videos in a single session, the work becomes tedious and impossible to do.

EP2932709B1 describes a computer-implemented method for editing and creating video comprising: (a) receiving a plurality of videos, each received video associated with a location information comprising latitude and longitude information of a location at which the video was captured and time information indicating a time when the video capture began wherein at least one video was captured by a first mobile device during a first time period and at least one video was captured by a second mobile device during a second time period, the first time period and the second time period at least partially overlap, wherein the time information for the video captured by the first mobile device and the second mobile device are generated at the same time clock; (b) grouping the received videos into an event based on the location information and the time information; (c) dividing each video associated with the event into a plurality of continuous video segments of a predetermined duration with one video segment per time slot for each video by determining pre-selected uniform time slots for each time slot, wherein the time slot of a respective time slot is applied to all video segments in said time slot and each video segment associated with a start time based on the time clock; (d) synchronously displaying the first video segments of the plurality of continuous video segments the video captured by the first mobile device and the second video segments of the plurality of continuous video segments of the video captured by the second mobile device, wherein each of the first video segments is associated with one of the second video segments by the same start time and the same predetermined duration; and (e) creating an edited video by selecting a plurality of first or second video segments, each corresponding to a different start time, and placing the plurality of selected video segments on a timeline of the editor.

However, this document describes a method oriented to share and create videos collectively by sharing such videos remotely. Simultaneous review of videos, in this case, does so by referring to different viewpoints and angles, as well as multiple locations of the videos, but does not allow comparing iterations of the same video in different languages.

Therefore, it is an object of the present invention to provide a video player and quality control method for video creation that can perform the reviewing and correction of multiple videos simultaneously.

### Summary of the invention

In a first aspect, the present invention consists of a computer-implemented quality control method for video creation arranged to compare iterations of the same video in different languages comprising the steps of **(a)** drag and drop a plurality of videos in a video player embedded in a navigator displayed in a screen; **(b)** show the plurality of videos in the screen wherein each video is individually shown in one window within the same screen; and **(c)** simultaneously and synchronously control all the videos displayed in the screen.

In a second aspect, the present invention claims a video player comprising means arranged to compare iterations of the same video in different languages including the steps of **(a)** drag and drop a plurality of videos in a video player embedded in a navigator displayed in a screen; **(b)** show the plurality of videos in the screen wherein each video is individually shown in one window within the same screen; and **(c)** simultaneously and synchronously control all the videos displayed in the screen.

Therefore, the present invention is not configured for video creation, but for playing previously produced and edited videos, to allow their simultaneous correction. The main object of the invention is to synchronize and play videos, as well as to execute commands to all videos at the same time allowing a fast and reliable review of the videos.

Moreover, the present invention also incorporates a tool that is configured to add comments to the videos and thereby create a fully standardized quality report that includes the screen capture of the video in question, name, time code and comment added. In this way, it will be possible to send this report to the editor in a simple, fast, and standardized way.

### Brief description of the drawings

To complete the description, and for the purpose of helping to make the features of the invention more readily understandable, this description is accompanied by a set of figures constituting an integral part of the same, which by way of illustration and no limitation represents the following:
- FIGURE 1 shows the initial screen of the video player that implements the present invention.
- FIGURE 2 shows the video player of the present invention in an example with 6 synchronized videos.
- FIGURE 3 shows the video player of the present invention in an example with 12 synchronized videos.
- FIGURE 4 is a block diagram of an example computing device(s) 100 suitable for use in implementing some embodiments of the present disclosure

### Detailed description

As can be seen in the attached figures, the present invention is materialized in a very intuitive computer-implemented method, which avoids the need to train users of the system, resulting in lower costs associated with the production and post-production of videos.

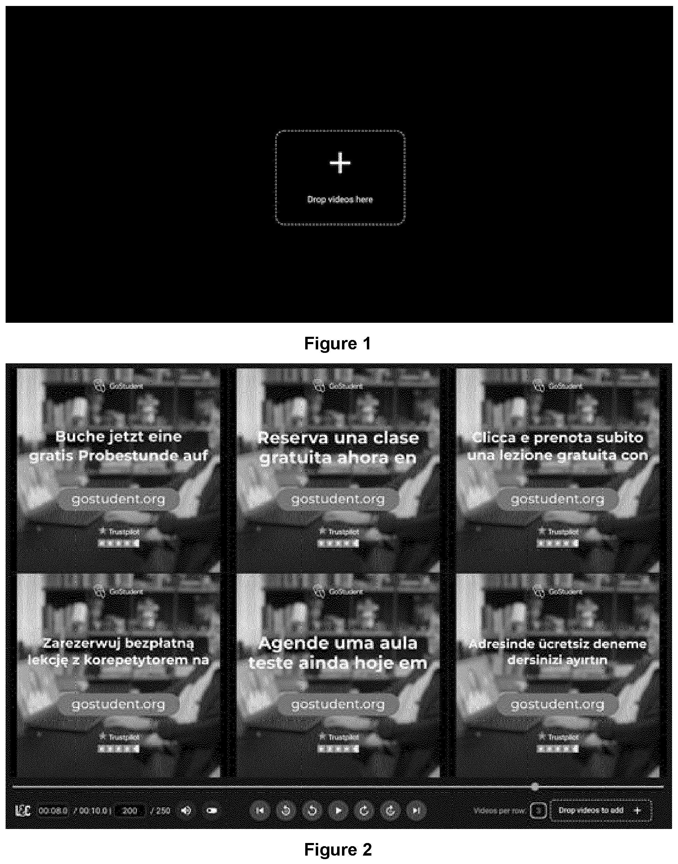

Firstly, as can be seen in FIGURE 1, the user is shown a black screen with a request to drag or load the video or videos to be reviewed and/or corrected if necessary. The videos, by default, are displayed in a three-column configuration -FIGURE 2- although this configuration can be modified by the user depending, for example, on the different proportions that a video can have, such as 1:1 (square), 16:9 (panoramic), 9:16 (vertical) or even the full screen size.

FIGURE 2 shows how each window of the six shown represents the same video sequence subtitled in different languages (one language per window) but with the particularity that there is only one control bar at the bottom of the screen. These controls allow synchronized actions to be performed for all windows. Thus, the controls are configured to start or pause all the videos at the same time, in a totally synchronous way and with absolute control by the user. In this way, several videos can be corrected at once by comparing them with a translation file, checking if they are consistent between the different videos, verifying that the audio is correct or that the video is exported correctly and that there are no errors in it.

In addition to the basic operation indicated, the computer-implemented method of the invention allows the following actions to be performed: put the video in full screen for a more detailed analysis; mute or activate the sound of all videos synchronously; select the audio of a particular video by pressing the number assigned to the video, to do so during playback; place an offset to one or more videos in order to synchronize them in case they have different lengths; forward or rewind videos frame by frame or 10 frames at a time; go to the beginning or end of videos; scroll directly to a specific frame or timecode; reorder videos within the screen; add or remove videos; and enable or disable video naming for easier identification.

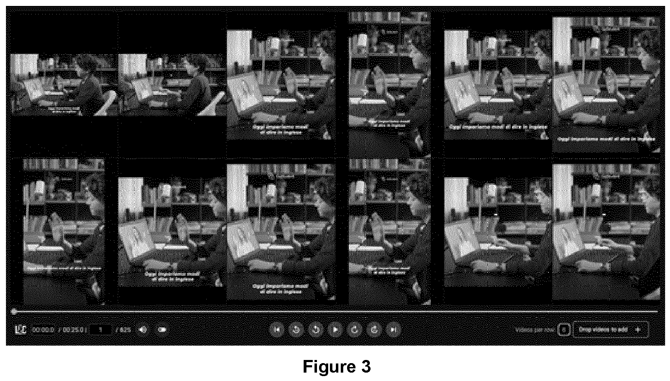

The present invention allows to watch a virtually unlimited number of videos, basically, as many as the screen size and the computational capacity of the video processing unit allows (FIGURE 3). This allows a huge time saving, and moreover, locally, without the need to upload the videos to any external platform or server remotely. For example, in a correction of 50 videos of 2 minutes, only for the first viewing of the videos the time saving is 98 minutes, since prior to the present invention it was necessary to watch the videos one by one (100 minutes) whereas with the present invention, the viewing is reduced to 2 minutes, since all 50 videos can be viewed at the same time.

It is important to note that the method of the invention is integrated in a browser such as Microsoft Edge, Google Chrome, Safari, or Mozilla Firefox. The invention is not configured for video editing, but for playing previously produced and edited videos, to allow their simultaneous correction. The main object of the invention is to synchronize and play videos, as well as to execute commands to all videos at the same time. Stopping, playing, muting and the rest of the functions previously indicated would be performed for all the videos displayed on the same screen at the same time. In this way, as the main objective is to review and, if necessary, correct different versions of the same video, but in different formats and languages, it is possible to check in a single viewing if the videos are correct, comparing them (manual or automatically), for example, with a file of *reliable* translations and/or the original file.

The tool of the present invention, moreover, has the particularity that it is not a tool that consumes large computing resources, on the contrary, it is a tool that works locally, avoiding any leakage of sensitive content, that does not lose frames nor has long loading times -unlike many players known in the state of the art-. This allows that when synchronizing 50 or 60 videos there is no mismatch between them and, if there is a mismatch, it is possible to synchronize them again by means of the controls at the bottom of the screen. To do this, the present invention, each time the playback times are changed, all the videos on the screen receive the necessary data to display the same frame and decide which video codecs it reads and how it plays them. This is implemented with JavaScript and HTML 5.

This and other arrangements described herein are set forth only as examples. Other arrangements and elements (e.g., machines, interfaces, functions, orders, groupings of functions, etc.) may be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by entities may be carried out by hardware, firmware, and/or software. For instance, various functions may be carried out by a processor executing instructions stored in memory.

Finally, the present invention also incorporates a tool that is configured to add comments to the videos and thereby create a fully standardized quality report that includes the screen capture of the video in question, name, time code and comment added. In this way, it will be possible to send this report to the editor in a simple, fast, and standardized way.

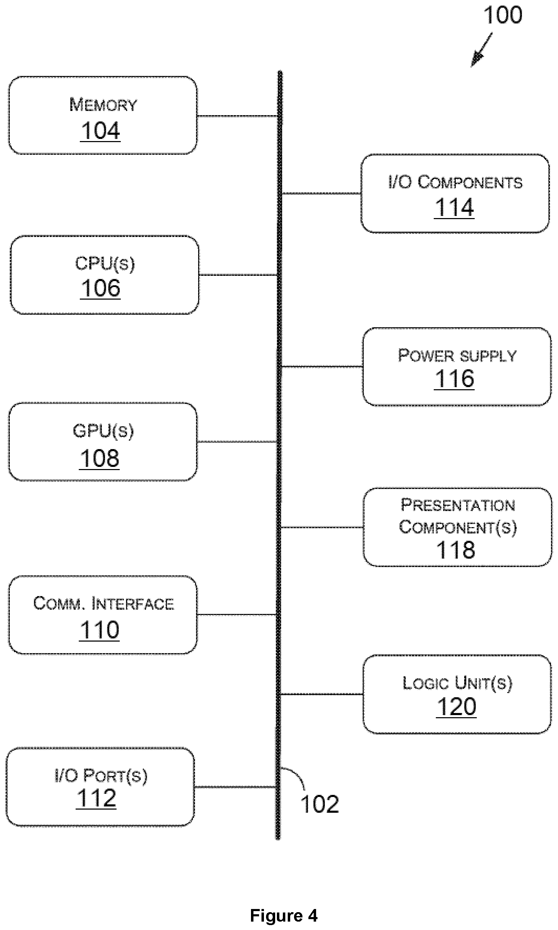

FIGURE 4 is a block diagram of an example computing device(s) 100 suitable for use in implementing some embodiments of the present disclosure. Computing device 100 may include an interconnect system 102 that directly or indirectly couples the following devices: memory 104, one or more central processing units (CPUs) 106, one or more graphics processing units (GPUs) 108, a communication interface 110, input/output (I/O) ports 112, input/output components 114, a power supply 116, one or more presentation components 118 (e.g., display(s)), and one or more logic units 120. In at least one embodiment, the computing device(s) 100 may comprise one or more virtual machines (VMs), and/or any of the components thereof may comprise virtual components (e.g., virtual hardware components). For non-limiting examples, one or more of the GPUs 108 may comprise one or more vGPUs, one or more of the CPUs 106 may comprise one or more vCPUs, and/or one or more of the logic units 120 may comprise one or more virtual logic units. As such, a computing device(s) 100 may include discrete components (e.g., a full GPU dedicated to the computing device 100), virtual components (e.g., a portion of a GPU dedicated to the computing device 100), or a combination thereof.

Although the various blocks of FIGURE 4 are shown as connected via the interconnect system 102 with lines, this is not intended to be limiting and is for clarity only. For example, in some embodiments, a presentation component 118, such as a display device, may be considered an I/O component 114 (e.g., if the display is a touch screen). As another example, the CPUs 106 and/or GPUs 108 may include memory (e.g., the memory 104 may be representative of a storage device in addition to the memory of the GPUs 108, the CPUs 106, and/or other components). In other words, the computing device of FIGURE 4 is merely illustrative. Distinction is not made between such categories as "workstation," "server," "laptop," "desktop," "tablet," "client device," "mobile device," "hand-held device," "game console," "electronic control unit (ECU)," "virtual reality system," and/or other device or system types, as all are contemplated within the scope of the computing device of FIGURE 4.

The interconnect system 102 may represent one or more links or busses, such as an address bus, a data bus, a control bus, or a combination thereof. The interconnect system 102 may include one or more bus or link types, such as an industry standard architecture (ISA) bus, an extended industry standard architecture (EISA) bus, a video electronics standards association (VESA) bus, a peripheral component interconnect (PCI) bus, a peripheral component interconnect express (PCIe) bus, and/or another type of bus or link. In some embodiments, there are direct connections between components. As an example, the CPU 106 may be directly connected to the memory 104. Further, the CPU 106 may be directly connected to the GPU 108. Where there is direct, or point-to-point connection between components, the interconnect system 102 may include a PCIe link to carry out the connection. In these examples, a PCI bus need not be included in the computing device 100.

The memory 104 may include any of a variety of computer-readable media. The computer-readable media may be any available media that may be accessed by the computing device 100. The computer-readable media may include both volatile and nonvolatile media, and removable and non-removable media. By way of example, and not limitation, the computer-readable media may comprise computer-storage media and communication media.

The computer-storage media may include both volatile and nonvolatile media and/or removable and non-removable media implemented in any method or technology for storage of information such as computer-readable instructions, data structures, program modules, and/or other data types. For example, the memory 104 may store computer-readable instructions (e.g., that represent a program(s) and/or a program element(s), such as an operating system. Computer-storage media may include, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which may be used to store the desired information, and which may be accessed by computing device 100. As used herein, computer storage media does not comprise signals per se.

The computer storage media may embody computer-readable instructions, data structures, program modules, and/or other data types in a modulated data signal such as a carrier wave or other transport mechanism and includes any information delivery media. The term "modulated data signal" may refer to a signal that has one or more of its characteristics set or changed in such a manner as to encode information in the signal. By way of example, and not limitation, the computer storage media may include wired media such as a wired network or direct-wired connection, and wireless media such as acoustic, RF, infrared and other wireless media. Combinations of any of the above should also be included within the scope of computer-readable media.

The CPU(s) 106 may be configured to execute at least some of the computer-readable instructions to control one or more components of the computing device 100 to perform one or more of the methods and/or processes described herein. The CPU(s) 106 may each include one or more cores (e.g., one, two, four, eight, twenty-eight, seventy-two, etc.) that can handle a multitude of software threads simultaneously. The CPU(s) 106 may include any type of processor and may include different types of processors depending on the type of computing device 100 implemented (e.g., processors with fewer cores for mobile devices and processors with more cores for servers). For example, depending on the type of computing device 100, the processor may be an Advanced RISC Machines (ARM) processor implemented using Reduced Instruction Set Computing (RISC) or an x86 processor implemented using Complex Instruction Set Computing (CISC). The computing device 100 may include one or more CPUs 106 in addition to one or more microprocessors or supplementary co-processors, such as math co-processors.

In addition to or alternatively from the CPU(s) 106, the GPU(s) 108 may be configured to execute at least some of the computer-readable instructions to control one or more components of the computing device 100 to perform one or more of the methods and/or processes described herein. One or more of the GPU(s) 108 may be an integrated GPU (e.g., with one or more of the CPU(s) 106 and/or one or more of the GPU(s) 108 may be a discrete GPU. In embodiments, one or more of the GPU(s) 108 may be a coprocessor of one or more of the CPU(s) 106. The GPU(s) 108 may be used by the computing device 100 to render graphics (e.g., 3D graphics) or perform general purpose computations. For example, the GPU(s) 108 may be used for General-Purpose computing on GPUs (GPGPU). The GPU(s) 108 may include hundreds or thousands of cores that are capable of handling hundreds or thousands of software threads simultaneously. The GPU(s) 108 may generate pixel data for output images in response to rendering commands (e.g., rendering commands from the CPU(s) 106 received via a host interface). The GPU(s) 108 may include graphics memory, such as display memory, for storing pixel data or any other suitable data, such as GPGPU data. The display memory may be included as part of the memory 104. The GPU(s) 108 may include two or more GPUs operating in parallel (e.g., via a link). The link may directly connect the GPUs (e.g., using NVLINK) or may connect the GPUs through a switch. When combined, each GPU 108 may generate pixel data or GPGPU data for different portions of an output or for different outputs (e.g., a first GPU for a first image and a second GPU for a second image). Each GPU may include its own memory or may share memory with other GPUs.

In addition to or alternatively from the CPU(s) 106 and/or the GPU(s) 108, the logic unit(s) 120 may be configured to execute at least some of the computer-readable instructions to control one or more components of the computing device 100 to perform one or more of the methods and/or processes described herein. In embodiments, the CPU(s) 106, the GPU(s) 108, and/or the logic unit(s) 120 may discretely or jointly perform any combination of the methods, processes and/or portions thereof. One or more of the logic units 120 may be part of and/or integrated in one or more of the CPU(s) 106 and/or the GPU(s) 108 and/or one or more of the logic units 120 may be discrete components or otherwise external to the CPU(s) 106 and/or the GPU(s) 108. In embodiments, one or more of the logic units 120 may be a coprocessor of one or more of the CPU(s) 106 and/or one or more of the GPU(s) 108.

Examples of the logic unit(s) 120 include one or more processing cores and/or components thereof, such as Tensor Cores (TCs), Tensor Processing Units (TPUs), Pixel Visual Cores (PVCs), Vision Processing Units (VPUs), Graphics Processing Clusters (GPCs), Texture Processing Clusters (TPCs), Streaming Multiprocessors (SMs), Tree Traversal Units (TTUs), Artificial Intelligence Accelerators (AIAs), Deep Learning Accelerators (DLAs), Arithmetic-Logic Units (ALUs), Application-Specific Integrated Circuits (ASICs), Floating Point Units (FPUs), input/output (I/O) elements, peripheral component interconnect (PCI) or peripheral component interconnect express (PCIe) elements, and/or the like.

The communication interface 110 may include one or more receivers, transmitters, and/or transceivers that enable the computing device 100 to communicate with other computing devices via an electronic communication network, included wired and/or wireless communications. The communication interface 110 may include components and functionality to enable communication over any of several different networks, such as wireless networks, wired, low-power wide-area, and/or the Internet.

The I/O ports 112 may enable the computing device 100 to be logically coupled to other devices including the I/O components 114, the presentation component(s) 118, and/or other components, some of which may be built in to (e.g., integrated in) the computing device 100. Illustrative I/O components 114 include a microphone, mouse, keyboard, joystick, game pad, game controller, satellite dish, scanner, printer, wireless device, etc. The I/O components 114 may provide a natural user interface (NUI) that processes air gestures, voice, or other physiological inputs generated by a user. In some instances, inputs may be transmitted to an appropriate network element for further processing. A NUI may implement any combination of speech recognition, stylus recognition, facial recognition, biometric recognition, gesture recognition both on screen and adjacent to the screen, air gestures, head and eye tracking, and touch recognition (as described in more detail below) associated with a display of the computing device 100. The computing device 100 may include depth cameras, such as stereoscopic camera systems, infrared camera systems, RGB camera systems, touchscreen technology, and combinations thereof, for gesture detection and recognition. Additionally, the computing device 100 may include accelerometers or gyroscopes (e.g., as part of an inertia measurement unit (IMU)) that enable detection of motion. In some examples, the output of the accelerometers or gyroscopes may be used by the computing device 100 to render immersive augmented reality or virtual reality.

The power supply 116 may include a hard-wired power supply, a battery power supply, or a combination thereof. The power supply 116 may provide power to the computing device 100 to enable the components of the computing device 100 to operate.

The presentation component(s) 118 may include a display (e.g., a monitor, a touch screen, a television screen, a heads-up-display (HUD), other display types, or a combination thereof), speakers, and/or other presentation components. The presentation component(s) 118 may receive data from other components (e.g., the GPU(s) 108, the CPU(s) 106, etc.), and output the data (e.g., as an image, video, sound, etc.).

The disclosure may be described in the general context of computer code or machine-useable instructions, including computer-executable instructions such as program modules, being executed by a computer or other machine, such as a personal data assistant or other handheld device. Generally, program modules including routines, programs, objects, components, data structures, etc., refer to code that perform tasks or implement abstract data types. The disclosure may be practiced in a variety of system configurations, including hand-held devices, consumer electronics, general-purpose computers, more specialty computing devices, etc. The disclosure may also be practiced in distributed computing environments where tasks are performed by remote-processing devices that are linked through a communications network.

As used herein, a recitation of "and/or" with respect to two or more elements should be interpreted to mean only one element, or a combination of elements. For example, "element A, element B, and/or element C" may include only element A, only element B, only element C, element A and element B, element A and element C, element B and element C, or elements A, B, and C. In addition, "at least one of element A or element B" may include at least one of element A, at least one of element B, or at least one of element A and at least one of element B. Further, "at least one of element A and element B" may include at least one of element A, at least one of element B, or at least one of element A and at least one of element B.

The subject matter of the present disclosure is described with specificity herein to meet statutory requirements. However, the description itself is not intended to limit the scope of this disclosure. Rather, the inventors have contemplated that the claimed subject matter might also be embodied in other ways, to include different steps or combinations of steps like the ones described in this document, in conjunction with other present or future technologies. Moreover, although the terms "step" and/or "block" may be used herein to connote different elements of methods employed, the terms should not be interpreted as implying any order among or between various steps herein disclosed unless and except when the order of individual steps is explicitly described.

## Claims

1. A computer-implemented quality control method for video creation arranged to compare iterations of the same video in different languages comprising the steps of **(a)** drag and drop a plurality of videos in a video player embedded in a navigator displayed in a screen; **(b)** show the plurality of videos in the screen wherein each video is individually shown in one window within the same screen; and **(c)** simultaneously and synchronously control all the videos displayed in the screen.

2. The computer-implemented quality control method for video creation according to claim 1 wherein the method is arranged to perform synchronized action for all the videos displayed in the screen, including to start or pause all the videos at the same time, in a totally synchronous way and with absolute control by the user; put the video in full screen for a more detailed analysis; mute or activate the sound of all videos synchronously; select the audio of a particular video by pressing the number assigned to the video, to do so during playback; place an offset to one or more videos in order to synchronize them in case they have different lengths; forward or rewind videos frame by frame or 10 frames at a time; go to the beginning or end of videos; scroll directly to a specific frame or timecode; reorder videos within the screen; add or remove videos; and enable or disable video naming for easier identification.

3. The computer-implemented quality control method for video creation according to claim 1 or claim 2 wherein each time the playback times are changed, all the videos on the screen receive the necessary data to display the same frame and decide which video codecs it reads and how it plays them.

4. The computer-implemented quality control method for video creation according to any of claims 1 to 3 that includes a step of adding comments to the videos and thereby creating a fully standardized quality report that includes the screen capture of the video in question, name, time code and comment added.

5. The computer-implemented quality control method for video creation according to any of claims 1 to 4 that includes a step of automatic detection of text in the video and a comparison with a second file.

6. A video player arranged to perform the method of any of claims 1 to 5 comprising means arranged to compare iterations of the same video in different languages including the steps of **(a)** drag and drop a plurality of videos in a video player embedded in a navigator displayed in a screen; **(b)** show the plurality of videos in the screen wherein each video is individually shown in one window within the same screen; and **(c)** simultaneously and synchronously control all the videos displayed in the screen.

## Amended claims

### Amended claims in accordance with Rule 137(2) EPC.

**1.** A computer-implemented quality control method for video creation to allow their simultaneous correction of different versions of the same video comprising the steps of (a) drag and drop a plurality of versions of the same video in a video player embedded in a browser displayed in a screen; (b) show the plurality of versions of the same video in the screen wherein each version of the video is individually shown in one window within the same screen; and (c) simultaneously and synchronously control all the versions of the same video displayed in the screen, to execute commands to all displayed versions of the same video on the same screen at the same time.

**2.** The computer-implemented quality control method for video creation according to claim 1 wherein the method is arranged to perform synchronized action for all the videos displayed in the screen, including to start or pause all the videos at the same time, in a totally synchronous way and with absolute control by the user; put the video in full screen for a more detailed analysis; mute or activate the sound of all videos synchronously; select the audio of a particular video by pressing the number assigned to the video, to do so during playback; place an offset to one or more videos in order to synchronize them in case they have different lengths; forward or rewind videos frame by frame or 10 frames at a time; go to the beginning or end of videos; scroll directly to a specific frame or timecode; reorder videos within the screen; add or remove videos; and enable or disable video naming for easier identification.

**3.** The computer-implemented quality control method for video creation according to claim 1 or claim 2 wherein each time the playback times are changed, all the videos on the screen receive the necessary data to display the same frame and decide which video codecs it reads and how it plays them.

**4.** The computer-implemented quality control method for video creation according to any of claims 1 to 3 that includes a step of adding comments to the videos and thereby creating a fully standardized quality report that includes the screen capture of the video in question, name, time code and comment added.

**5.** The computer-implemented quality control method for video creation according to any of claims 1 to 4 that includes a step of automatic detection of text in the video and a comparison with a second file.

**1.** A computer-implemented quality control method for video creation to allow their simultaneous correction of different versions of the same video comprising the steps of (a) drag and drop a plurality of versions of the same video in a video player embedded in a browser displayed in a screen; (b) show the plurality of versions of the same video in the screen wherein each version of the video is individually shown in one window within the same screen; (c) simultaneously and synchronously control all the versions of the same video displayed in the screen, to execute commands to all displayed versions of the same video on the same screen at the same time, and (d) a step of adding comments to the videos and thereby creating a fully standardized quality report that includes the screen capture of the video in question, name, time code and comment added.

**2.** The computer-implemented quality control method for video creation according to claim 1 wherein the method is arranged to perform synchronized action for all the videos displayed in the screen, including to start or pause all the videos at the same time, in a totally synchronous way and with absolute control by the user; put the video in full screen for a more detailed analysis; mute or activate the sound of all videos synchronously; select the audio of a particular video by pressing the number assigned to the video, to do so during playback; place an offset to one or more videos in order to synchronize them in case they have different lengths; forward or rewind videos frame by frame or 10 frames at a time; go to the beginning or end of videos; scroll directly to a specific frame or timecode; reorder videos within the screen; add or remove videos; and enable or disable video naming for easier identification.

**3.** The computer-implemented quality control method for video creation according to claim 1 or claim 2 wherein each time the playback times are changed, all the videos on the screen receive the necessary data to display the same frame and decide which video codecs it reads and how it plays them.

**4.** The computer-implemented quality control method for video creation according to any of claims 1 to 3 that includes a step of automatic detection of text in the video and a comparison with a second file.
